**Europäisches Patentamt**

**European Patent Office**

**Office européen des brevets**

(19)

(11) Veröffentlichungsnummer: **0 236 388 B1**

## (12) EUROPÄISCHE PATENTSCHRIFT

(45) Veröffentlichungstag der Patentschrift: **06.06.90**

(21) Anmeldenummer: **86905275.3**

(22) Anmeldetag: **23.08.86**

(86) Internationale Anmeldenummer:
**PCT/EP86/00496**

(87) Internationale Veröffentlichungsnummer:
**WO 87/01437 12.03.87 Gazette 87/06**

(51) Int. Cl.$^5$: **F 28 F 19/04, B 29 C 67/00**

(54) **VERFAHREN ZUR BESCHICHTUNG VON ROHRBÖDEN OD.DGL. VON KONDENSATOREN, KÜHLERN, WÄRMETAUSCHERN OD.DGL. MIT EINEM KORROSIONSSCHUTZMITTEL.**

(30) Priorität: **31.08.85 DE 3531150**

(43) Veröffentlichungstag der Anmeldung:
**16.09.87 Patentblatt 87/38**

(45) Bekanntmachung des Hinweises auf die
Patenterteilung:
**06.06.90 Patentblatt 90/23**

(84) Benannte Vertragsstaaten:
**AT BE CH DE FR GB IT LI LU NL SE**

(56) Entgegenhaltungen:
**DE-A-3 152 899**
**GB-A-1 175 157**
**JP-A-60 134 197**
**US-A-1 894 957**

**MOLD MAKING HANDBOOK FOR THE PLASTIC ENGINEER, Klaus Stöckhert, Collier Macmillan 1983, p. 160, 161**

(73) Patentinhaber: **Dipl.-Ing. Ernst Kreiselmaier
Wasser- und Metall-Chemie KG
Hornstrasse 26
D-4390 Gladbeck (DE)**

(72) Erfinder: **KREISELMAIER, Richard
Luggendelle 17
D-4660 Gelsenkirchen-Buer (DE)**

(74) Vertreter: **Spalthoff, Adolf, Dipl.-Ing.
Pelmanstrasse 31 Postfach 34 02 20
D-4300 Essen 1 (DE)**

Courier Press, Leamington Spa, England.

## Beschreibung

Die Erfindung betrifft ein Verfahren zur Beschichtung von Rohrböden von Kondensatoren, Kühlern oder Wärmetauschern mit einem Korrosionsschutzmittel, wobei in den Enden der Rohre über deren Stirnkanten nach außen vorragende Stopfen eingesetzt werden, die nach der Beschichtung entfernt werden.

Durch die GB-A-1 175 157 ist es bekannt, die Rohrböden von Kondensatoren, Kühlern oder Wärmetauschern gegen Korrosion mit einer Schicht aus Kunststoff zu versehen. Zu diesem Zwecke ist es erforderlich, nach Freilegen der Rohrböden die Enden der in diese eingesetzten Rohre aufzuweiten und deren Öffnungen mittels Kunststoffstopfen zu verschließen. Das Korrosionsschutzmittel wird von Hand als Spachtelmasse auf die Rohrböden aufgebracht, und zwar mit einer solchen Schichtdicke, daß die Stopfen überdeckt sind, um eine vollständige Beschichtung zu gewährleisten. Nach Aushärtung des Korrosionsschutzmittels wird dieses oberhalb der Stopfen abgeschliffen, so daß diese einzeln entfernt werden können. Die Anbringung von Schichten eines Korrosionsschutzmittels auf den Rohrböden hat sich bestens bewährt, jedoch erweist sich die Durchführung des vorerwähnten Verfahrens als vergleichsweise umständlich und damit sehr aufwendig.

Aus dem Bauwesen ist es bekannt, durch eine Schalung eine Hohlform des Baukörpers zu bilden, die mit flüssigen oder plastischen, später hart werdenden Baustoffen, beispielsweise Beton, ausgefüllt wird. Nach Erstarren der Füllung wird die Schalung entfernt und der Baukörper im Rohbau freigelegt.

Von diesem Stand der Technik ausgehend liegt der Erfindung die Aufgabe zugrunde, unter Vermeidung vorerwähnter Nachteile ein Verfahren zur Beschichtung von Rohrböden von Kondensatoren, Kühlern oder Wärmetauschern mit einem Korrosionsschutzmittel zu schaffen, welches in einfacher und schneller Weise durchführbar ist und eine einwandfreie Beschichtung der Rohrböden gewährleistet.

Diese Aufgabe wird erfindungsgemäß durch folgende Verfahrensschritte gelöst:

a) vor die Rohrböden werden vor der Beschichtung ein oder mehrteilige Schalungen unter fester Anlage a die oberen Außenseiten der Stopfen und Bildung eines in sich geschlossenen Zwischenraumes zwischen Rohrböden und Schalung gesetzt;

b) der Zwischenraum wird mit dem Korrosionsschutzmittel unter Bildung einer Beschichtung der Rohrböden verfüllt;

c) nach einer bestimmten Zeit werden die Schalungen abgenommen.

Auf diese Weise ist es möglich, das Korrosionsschutzmittel zur Ausbildung der Beschichtung der Rohrböden durch Giessen, Spritzen usw. in den geschlossenen Zwischenraum einzubringen, was in vergleichsweise kurzer Zeit möglich ist. Durch die auf den Außenseiten der Stopfen anliegenden Schalungen ist gewährleistet, daß deren äußere Stirnseiten nicht von dem Beschichtungsmittel bedeckt sind, so daß diese nach Entfernen der Schalungen ohne eines besonderen Schleifvorganges unmittelbar herausgezogen werden können. Um das Herausziehen zu erleichtern, sind die Stopfen mit einer oder mehreren Bohrungen versehen, in die ein Dorn od.dgl. eingesteckt werden kann. Bei Durchführung des erfindungsgemäßen Verfahrens wird somit eine gleichmäßige, einwandfreie Beschichtung in vergleichsweise kurzen Zeiten ermöglicht.

Die Rohrenden können konisch oder bogenförmig erweitert werden, wobei durch die Formgebung der Außenkonturen der Stopfen sichergestellt ist, daß die über die Rohrböden vorstehenden Enden der Rohre allseitig von dem Korrosionsschutzmittel umgeben sind und sich ggf. trompetenförmige Einläufe ergeben, welche sich aus strömungstechnischer Sicht als besonders vorteilhaft erweisen.

Als Korrosionsschutzmittel findet ein Epoxidharz Verwendung, welches einen hohen Kojb crrosionsschutz gewährleistet.

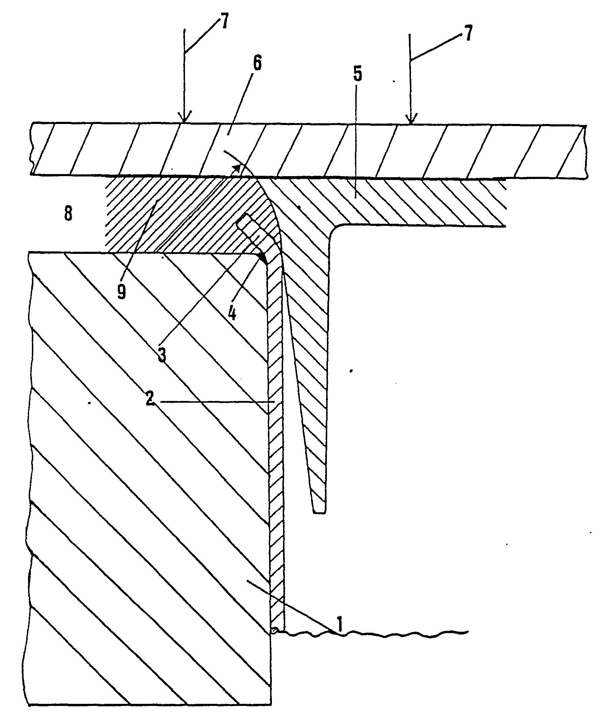

Ein Ausführungsbeispiel der Erfindung ist an Hand der Zeichnung näher erläutert, und zwar zeigt diese in vergrößerter Darstellung eine geschnittene Draufsicht eines Randbereiches eines Rohrendes in einem Rohrboden.

Mit 1 ist der Rohrboden, beispielsweise eines Kondensators, bezeichnet, in den eine Vielzahl von Rohren eingesetzt ist von denen lediglich eine Wandung eines Rohres 2 dargestellt ist.

Die Rohre 2 sind an ihren Enden 3 im Rohrboden 1 durch Einwalzung befestigt. Der Rohrboden 1 weist an den die Bohrungen zur Aufnahme der Rohre 2 umgebenden Rändern Anfasungen auf, welche mit 4 bezeichnet sind.

Nach Aufweitung der Enden 3 der Rohre 2 werden in diese Stopfen 5 aus Kunststoff eingesetzt, welche die Stirnkanten der Enden 3 der Rohre 2 nach außen hin überragen.

Vor die Rohrböden 1 sind ein oder mehrteilige Schalungen 6 gesetzt, und zwar unter fester Anlage an die Außenseiten der Stopfen 5. Zu diesem Zwecke sind Spannmittel vorgesehen, welche in Form von Pfeilen 7 angedeutet sind. Diese üben einen gleichmäßigen Druck auf sämtliche in die Enden 3 der Rohre 2 eingesetzte Stopfen 5 aus. Als Spannmittel können Schraubzwingen, Zylinder-Kolben-Einheiten usw. Verwendung finden.

Die ein- oder mehrteiligen Schalungen 6 sind so ausgebildet, daß diese einen in sich geschlossenen Zwischenraum 8 zwischen den Außenseiten der Rohrböden 1 und den Innenseiten der Schalungen 6 ausbilden.

Der Zwischenraum 8 wird mit Korrosionsschutzmittel ausgefüllt, so daß sich auf den Außenseiten der Rohrböden 1 eine Beschichtung 9 ergibt. Die frei vorragenden Enden 3 der Rohre 2 erstrecken sich in die Beschichtung 9 hinein, so daß diese allseitig von dem Korrosionsschutzmittel umschlossen sind.

Durch de Formgebung der Außenseiten der Stopfen 5 ist es möglich, die Ein- und Ausläufe in die Rohre 2 wunschgemäß zu gestalten, so daß diese, wie im dargestellten Ausführungsbeispiel, eine trompetenförmige Gestalt haben können.

Nach Aushärten des Korrosionsschutzmittels und damit Ausbildung der Beschichtung 9 kann die Schalung 6 durch Lösen ihrer Spannmittel 7 abgenommen werden, woraufhin de freiliegenden Stopfen 5 leicht und schnell entfernt werden können.

Mit Hilfe des erfindungsgemäßen Verfahrens ist es möglich, die Durchführung von Beschichtungsarbeiten an den Rohrböden von Kondensatoren, Kühlern oder Wärmetauschern wesentlich zu vereinfachen und zu beschleunigen sowie Stillstandszeiten erheblich zu verringern.

**Patentansprüche**

1. Verfahren zur Beschichtung von Rohrböden von Kondensatoren, Kühlern oder Wärmetauschern mit einem Korrosionsschutzmittel, wobei in den Enden (3) der Rohre (2) über deren Stirnkanten nach außen vorragende Stopfen (5) eingesetzt werden, die nach der Beschichtung entfernt werden, gekennzeichnet durch folgende Verfahrensschritte:

a) vor die Rohrböden (1) werden vor der Beschichtung ein- oder mehrteilige Schalungen (6) unter fester Anlage an die oberen Außenseiten der Stopfen (5) und Bildung eines in sich geschlossenen Zwischenraumes (8) zwischen Rohrböden (1) und Schalung (6) gesetzt;

b) der Zwischenraum (8) wird mit dem Korrosionsschutzmittel unter Bildung einer Beschichtung (9) der Rohrböden (1) verfüllt;

c) nach einer bestimmten Zeit werden die Schalungen (6) abgenommen.

2. Verfahren nach Anspruch 1, dadurch gekennzeichnet, daß die Enden (3) der in die Rohrböden (1) eingesetzten Rohre (2) aufgeweitet werden.

3. Verfahren nach Anspruch 1 oder 2, dadurch gekennzeichnet' daß die Stopfen (5) in ihrer äußeren Formgebung den Erfordernissen der Einströmverhältnisse angepaßt werden.

4. Verfahren nach Anspruch 1 oder einem der vorhergehenden, dadurch gekennzeichnet, daß die Enden (3) der Rohre (2) konisch oder trompetenartig erweitert werden.

5. Verfahren nach Anspruch 1 oder einem der vorhergehenden, dadurch gekennzeichnet, daß als Korrosionsschutzmittel ein Epoxidharz verwendet wird.

**Revendications**

1. Procédé pour enduire les fonds tubulaires de condenseurs, de refroidisseurs ou d'échangeurs de chaleur d'un agent anticorrosif, dans les extrémités (3) des tubes (2) étant insérés des tampons (5) qui font saillie extérieurement en dehors des arêtes frontales de ceux-ci et que l'on enlève après l'enduction, caractérisé par les phases suc cessives suivantes du procédé:

a) avant l'enduction, on dispose devant les fonds tubulaires (1) des coffrages (6) en une ou plusieurs parties venant solidement s'appliquer sur les faces supérieures externes des tampons (5) et formant un espace intermédiaire fermé (8) entre les fonds tubulaires (1) et le coffrage (6);

b) on remplit l'espace intermédiaire (8) d'agent corrosif avec enduction simultanée (9) des fonds tubulaires (1);

c) après un temps déterminé on enlève les coffrages (6).

2. Procédé selon la revendication 1, caractérisé par le fait qu'on élargit les extrémités (3) des tubes (2) engagées dans les fonds tubulaires (1).

3. Procédé selon la revendication 1 ou 2, caractérisé, par le fait qu'on adapte la configuration extérieure des tampons (5) aux exigences imposées par les conditions d'écoulement à l'admission.

4. Procédé selon la revendication 1 ou l'une des précédentes, caractérisé par le fait qu'on élargit les extrémités (3) des tubes (2) en forme de cône ou de trompette.

5. Procédé selon la revendication 1 ou l'une des précédentes, caractérisé par le fait que comme agent anticorrosif on utilise une résine époxy.

**Claims**

1. Process for coating tube plates of condensers, coolers or heat exchangers with an anticorrosive agent, whereby outwards projecting plugs (5) are inserted in the ends (3) of the tubes (2) over their end edges and the plugs are removed after the coating, characterised by the following process steps:

a) Single or multi-part casings (6) are placed in front of the tube plates (1) before coating so that there is firm contact with the upper outer sides of the plugs (5) and the formation of an intermediate space (8) between tube plates (1) and casing (6), which is closed in itself;

b) The intermediate space (8) is filled with the anticorrosive agent whilst forming a coating (9) of the tube plates (1);

c) The casings (6) are removed after a predetermined time.

2. Process according to claim 1, characterised in that the ends (3) of the tubes inserted into the tube plates (1) are expanded.

3. Process according to claim 1 or 2, characterised in that the plugs (5) have been adapted in their external profiling to the requirements of the intake conditions.

4. Process according to claim 1 or one of the preceding 1 claims, characterised in that the ends (3) of the tubes (2) are expanded in a conical or trumped-shaped manner.

5. Process according to claim 1 or one of the preceding claims, characterised in that an epoxy resin is used as the anticorrosive agent.